Europäisches Patentamt

European Patent Office

Office européen des brevets

(11) Publication number: **0 511 442 A1**

# EUROPEAN PATENT APPLICATION

(21) Application number: **91303957.4**

(22) Date of filing: **01.05.91**

(51) Int. Cl.⁵: **B64C 33/02**

(43) Date of publication of application:
**04.11.92 Bulletin 92/45**

(84) Designated Contracting States:
**CH DE FR GB IT LI**

(71) Applicant: **Yasuda, Hiroaki**
**12-1107, 5-ban Honjocho 2-chome,**
**Higashinada-ku**
**Kobe(JP)**

(72) Inventor: **Yasuda, Hiroaki**
**12-1107, 5-ban Honjocho 2-chome,**
**Higashinada-ku**
**Kobe(JP)**

(74) Representative: **Smith, Martin Stanley et al**
**Stevens, Hewlett & Perkins 1 St. Augustine's**
**Place**
**Bristol BS1 4UD(GB)**

(54) **Man-powered hang glider.**

(57) A man-powered hang glider having main wings (8a,8b) which are attached swingably to posts (1) through the medium of a telescopic joint (10). A rope (15) is looped between a pedal (14) provided at a lower part of the post (1) and the main wing (8) and is fixed to the pedal (14) and the main wing. By operation of the pedal (14), the wing (8) is flapped as the flapping of a bird wing. By flapping action of the main wings (8), the hang glide is enabled to fly, irrespective of upcurrents.

Fig. 1

EP 0 511 442 A1

This invention relates to a man-powered hang glider which can take off and fly by flapping its wings, like a bird, and also can soar with its wings kept stationary. Description of the prior art:

Man-powered flight has been a long-cherished dream, and after repeated trial and error the so-called hang glider which can be controlled by a man hanging thereon was invented.

Hang gliders now in general use are of standard Rogallo type. Improvements of this standard Rogallo type are a roached batten tip type, a radial batten tip type, a truncated tip type, a truncated batten tip type, a curved tip type and the like. Each of these hang gliders has the following construction, namely, leading edges are arranged in the direction of intersecting a keep at its top point, both leading edges are connected by a cross bar, a control bar is suspended from the cross bar, sailcloth is stretched on the leading edges and battens and the wing is of fixed type. These hang gliders glide through the air by catching an upcurrent and are controlled by adjustment of the pilot's body weight on the control bar.

Although various types of hang glider (variations of the wing shape) have been disclosed as mentioned above, each of them has a wing fixed to a keel and a pilot is required to do an approach run so as to catch an upcurrent or to leap down from a high place. Therefore, a difference in altitude between the taking off point and the landing point is necessary and even if taking off by an approach run is successful, unless an upcurrent is caught properly by the wing, soaring or continuous soaring for many hours is difficult.

## SUMMARY OF THE INVENTION

An object of the present invention is to provide a hang glider which not only can soar by catching an upcurrent like conventional hang gliders but also can take off, land and glide by flapping its wings, like a bird, by man power.

According to the invention there is provided a man-powered hang glider comprising right and left main wings of flexi-wing type; a frame having posts to the upper parts of which the main wings are attached swingably in up and down directions through the medium of a telescopic joint; a rope stretched in a loop between a pedal and the main wing, being fixed at the pedal and the main wing, whereby both main wings are flapped by operation of the pedals in such a fashion that a leading edge of a wing always moves before a trailing edge of the wing, so as to obtain lift and thrust.

## BRIEF DESCRIPTION OF THE DRAWINGS

The nature and advantage of the present invention will be understood more clearly from the following description made with reference to the accompanying drawings, in which:

Figure 1 is a front view of a hang glider according to the present invention;

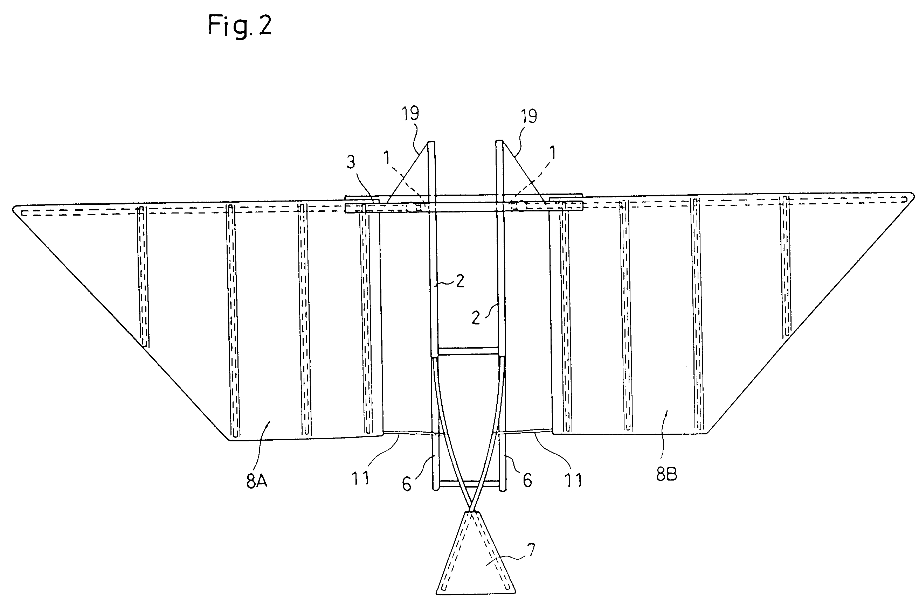

Figure 2 is a plan view of the hang glider shown in Figure 1;

Figure 3 (A) and Figure 3 (B) are side views of the hang glider shown in Figure 1;

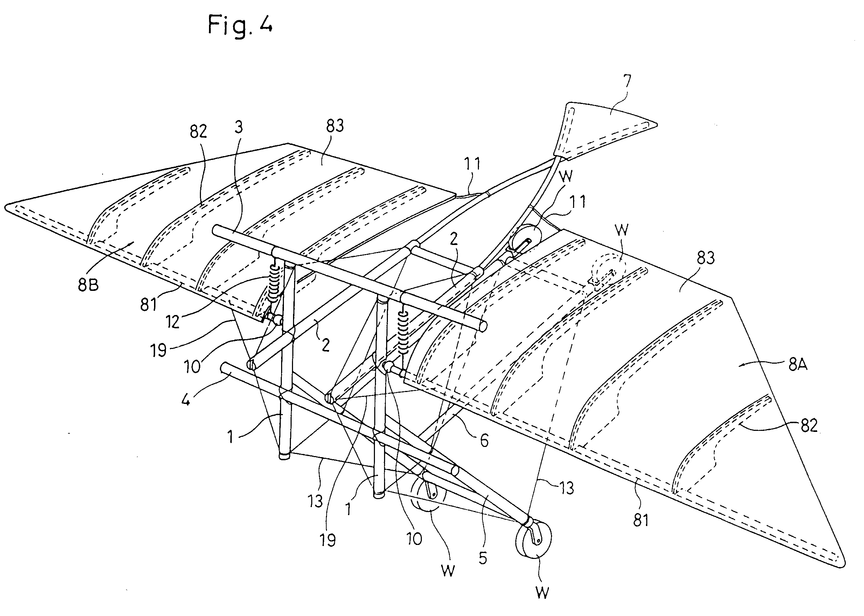

Figure 4 is a perspective view of the hang glider shown in Figure 1; and

Figure 5 is an explanatory drawing, showing lift and thrust to be obtained by flapping motion of the main wing.

## DETAILED DESCRIPTION OF THE INVENTION

An explanation is made below about a hang glider which can fly by human strength according to the present invention, on the basis of the accompanying drawings.

In the drawings, reference numeral 1 designates posts which also act as control bars. The posts 1 are vertical parallel with each other. The distance between the two posts 1 is such that a pilot may locate himself there-between. Two keels 2 in parallel with each other are arranged in such a fashion that they intersect the posts 1 and both the post 1 and the keel 2 are joined together. The distance between the two keels is the same as that between the two posts 1. An upper frame 3 and a lower frame 4 are laid transversely at the upper end and at the intermediate part respectively of the posts 1, and the frames 3, 4 and the posts 1 are joined together. The upper and the lower frames 3, 4 are in parallel with each other and intersect the post 1 but intersect the keel 2 in different intersecting direction. Under this arrangement, when the hang glider according to the present invention is in a horizontal soaring state, the keel 2 is in parallel with the soaring direction, the post 1 intersects the keel 2 at right angles vertically and the upper and the lower frames 3, 4 intersect the posts 1 horizontally.

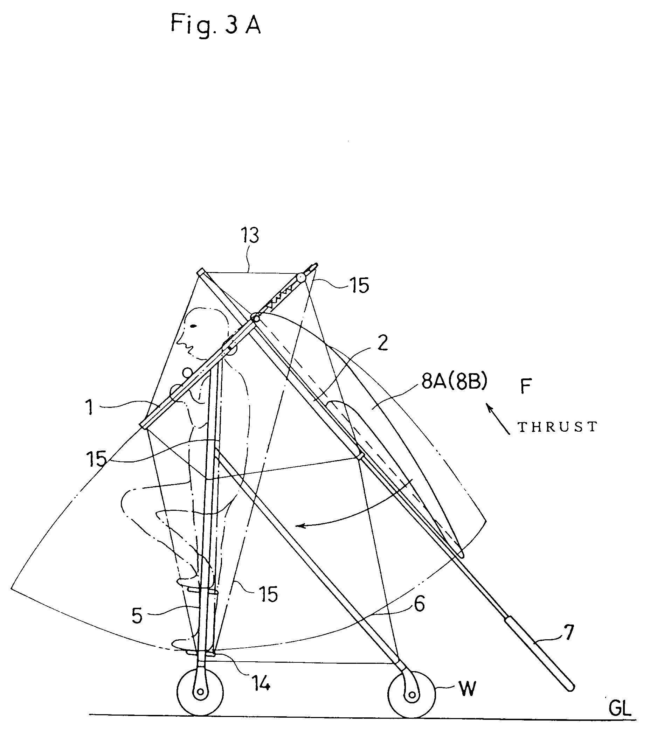

A main frame 5 of the required length is connected at a top end thereof to the intermediary part of the posts 1, in parallel with the keel 2 or at a certain degree of angle in relation to the keel 2. An auxiliary frame 6 is projected from the main frame 5 which is fixed. The main frame 5 and the auxiliary frame 6 are provided opposite to each post 1. Wheels W are provided at the lower ends of the main frame and the auxiliary frame so as to support a load on the hang glider and also to assist the approach run by a pilot at takeoff. As shown in Figure 3 (A), the main frame 5 is so set that it is perpendicular or nearly perpendicular in relation to the horizontal line, like a pilot who is supported by a harness along the main frame 5 at takeoff, landing or ascending, but when soaring in horizontal direction at the required altitude after ascending, the main wing 8A (8B) is put in a horizontal state and the main frame 5 is placed at the 30 - 60° angle of incidence (forward inclination)

The two keels 2, while being generally parallel with each other, are crossed at the rear part thereof and a triangle in the rear of the intersecting point is made into a tail wing 7, on which sailcloth is laid. A main wing comprises a left main wing 8A and a right main wing 8B in symmetrical form. A flexible joint, for example, a telescopic joint 10 which is bendable in all directions (360°) is interposed between the post 1 and the base end side of a leading edge 81 (of the left main wing 8A/the right main wing 8B), whereby the left main wing 8A and the right main wing 8B are attached to and supported by the post 1 in such a fashion that both main wings 8A, 8B are swingable simultaneously or either one of them is swingable in up and down directions, as the wings of a bird.

Since the left main wing 8A and the right main wing 8B are in symmetrical form, the following explanation will be confined to the left main wing 8A.

In consideration of the wing surface load, the cord length, the spar and the wing shape should be so determined that the left main wing 8A has a predetermined wing area. Many battens 82 are provided at a regular pitch in lengthwise direction of the leading edge 81 and intersecting the leading edge 81. Sailcloth 83 is laid on the surface of the leading edge 81 and the battens 82 and thus the desired main wing 8A is obtained. The cross sectional shape of the main wing with battens is do determined that lift at soaring is generated effectively. The sailcloth 83 is attached to the leading edge 81 and each batten 82 but the rear edge (trailing edge) of the wing is made a free end (the wing section of the so-called flexi-hang). A rear end portion at the inside of the sailcloth 83 and the keel 2 are joined by a flexible rope 11 so that the rear edge (trailing edge) of the left main wing 8A is made swingable freely within the limit of an allowable vertical swinging angle, thereby preventing the trailing edge from flapping more than necessary. The left main wing 8A under the above composition is attached to the post 1 through the medium of the telescopic joint 10. Since the wing surface loading on the main wing is mainly supported by the joint 10, the joint 10 should have ample strength. In order to keep the left main wing 8A and the right main wing 8B horizontal, unless subjected to external force, a coil spring 12 is interposed between the upper frame 3 and the leading edge 81 of each main wing 8A, 8B. In order to prevent a sweepback angle larger than an allowable angle from occurring due to wind pressure at soaring, a rope 19 is stretched between a top end of the keel 2 and the leading edge 81.

In the drawing, reference numeral 13 designates a reinforcing wire stretched around each frame, the post and the keel for reinforcing the frames against load subjected during soaring.

Since the left main wing 8A and the right main wing 8B are joined to each post through the medium of the telescopic joint, swinging motion or flapping motion of the main wing (simultaneous flapping of both wings or flapping of either of them) can be done by working a pedal (to be described later). The hang glider according to the present invention not only can be used in the same way as in the case of a conventional hang glider of fixed main wing type, namely, by catching upcurrent by a pilot's approach run or by leaping down from a high place but also can utilise the muscular strength of pilot's legs as mentioned below.

In the present invention, a pedal 14 is provided at the lower inside of each main frame 5 and a rope 15 is stretched in loop shape between the pedal 14 and the main wing 8A (8B), passing a roller provided at the upper frame 3 and a roller provided at the lower side of the main frame 5 and is fixed at the pedal and the main wing. By working the pedal 14, the main wing 8A (8B) is moved up and down with the telescopic joint 10 as a pivot, more particularly, when the pedal is depressed the main wing 8A (8B) is drawn downwardly but when the pedal is raised the main wing 8A (8B) is drawn upwardly. The pedal is fixed to the leg of the pilot and by bending and stretching of the leg in up and down directions, the main wing is flapped through the medium of the rope 15. According to this flapping (swinging up and down) of the main wing, the leading edge swings up and down but the rear edge of the wing (trailing edge) swings a little later than the leading edge because of the flexi-wing effect. This relative swinging causes bird-like flapping, whereby lift and thrust are obtained.

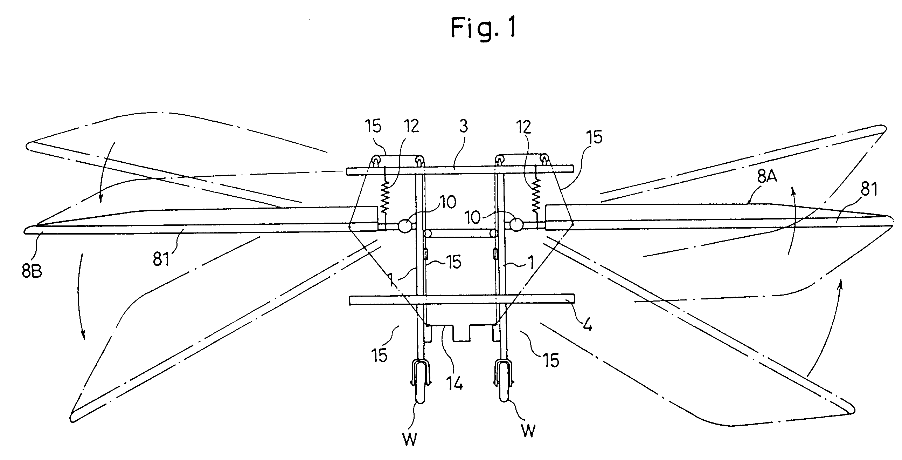

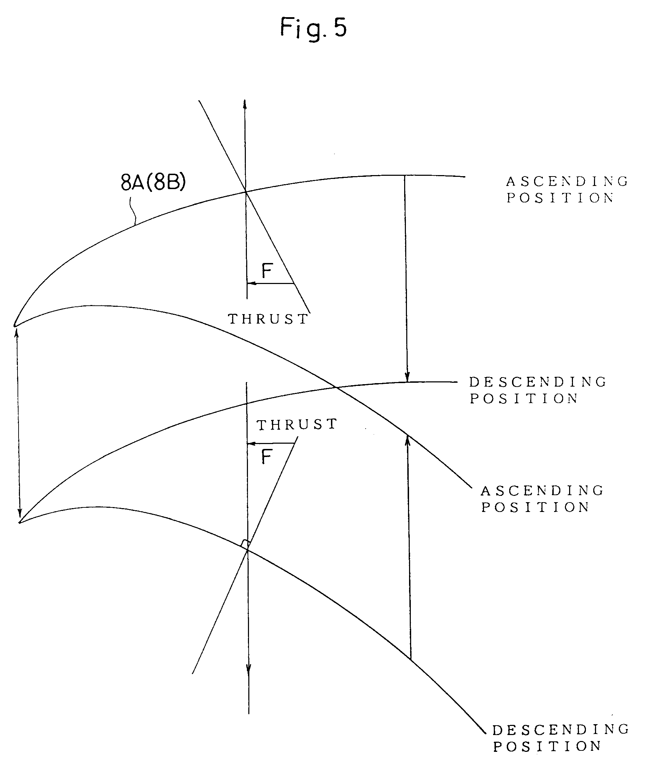

When the pedal is moved up and down by bending and stretching of the leg, the leading edge 81 of the main wing 8A (8B) is moved directly by the rope 15 attached to the pedal but the rear edge (trailing edge) of the main wing is not moved directly by the rope 15. Therefore, the trailing edge of the main wing moves up and down with the specified time lag in relation to the leading edge. This causes the motion which is just like flapping of a bird. As shown in Figure 1 and Figure 5, at flapping of the main wing the leading edge always moves, preceding the trailing edge, irrespective of whether the glider descends or ascends and therefore thrust F is obtained by up and down motion of the wing and soaring can be achieved. By carrying out this flapping motion of the main wing strongly and quickly, appreciable thrust and lift can be obtained and thus takeoff is made possible.

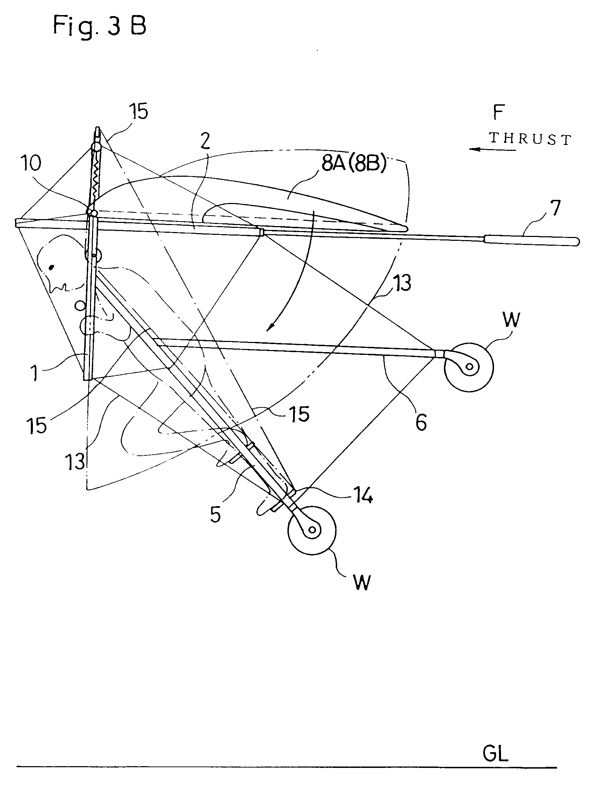

As shown in Figure 3 (A), when the hang glider is in a stationary state on the ground, a pilot stands up and the main wing is placed at the required angle of incidence. By making the pedals move up and down simultaneously, both main wings flap simultaneously in up and down directions and the hang glider obtains thrust and can take off. When the glider reaches the required altitude after ascending, it is put in a horizontal soaring state. At this time, by catching an upcurrent the hang glider is enabled to soar without flapping main wings, just as a bird soaring with its wings kept stationary. In this horizontal soaring state, the pilot is in a forward inclination state as shown in Figure 3 (B).

While the hang glider is soaring, if either of the pedals is depressed, the main wing on the side of the depressed pedal is drawn downwardly to some extent, whereby lift difference is caused between the right and the left main wings and the hang glider leans toward the direction in which the main wing is drawn downwardly and thus the soaring direction can be changed.

Thus, the right main wing and the left main wing of flexi-wing type are attached swingably (can be flapped in up and down directions) to a post connected with frames through the medium of a telescopic joint, a rope is stretched in loop shape between a pedal provided along a main frame provided at a post and the right left main wing and both main wings are flapped by operation of the pedals to obtain lift and thrust. Under this structure, the hang glider not only can soar by catching upcurrent with its both wings kept stationary as in the case of a conventional hang glider but also can take off and ascend by flapping both main wings, like flapping of a bird, by moving the pedals up and down (the pedals are moved by muscular strength of a pilot). Also, the change of direction can easily be effected by drawing down either of the right main wing and the left main wing by operation of the pedal.

## Claims

1. A man-powered hang glider comprising right and left main wings of flexi-wing type; a frame having posts to the upper parts of which the main wings are attached swingably in up and down directions through the medium of a telescopic joint; a rope stretched in a loop between a pedal and the main wing, being fixed at the pedal and the main wing, whereby both main wings are flapped by operation of the pedals in such a fashion that a leading edge of a wing always moves before a trailing edge of the wing, so as to obtain lift and thrust.

2. A man-powered hang glider as claimed in Claim 1, wherein a coil spring is interposed between an upper frame and a base end side of a leading edge of each main wing and a rope is stretched between a top end of a keel and the leading edges and also between the rear edge of the main wing and the corresponding part of the keel.

3. A man-powered hang glider as claimed in Claim 1, wherein wheels are provided at lower ends of a main frame which projects from the posts so that the main frame is put in a perpendicular state or in a nearly perpendicular state when a pilot is supported by a harness on the main frame at takeoff, landing and ascending.

4. A man-powered hang glider as claimed in Claim 1, wherein the main wings are so designed that the hang glider can soar by action of an upcurrent with the main wings kept stationary.

Fig. 1

EP 0 511 442 A1

Fig. 2

EP 0 511 442 A1

Fig. 3 A

Fig. 3 B

GL

Fig. 4

EP 0 511 442 A1

# Fig. 5

8A(8B)

F

THRUST

THRUST

F

ASCENDING POSITION

DESCENDING POSITION

ASCENDING POSITION

DESCENDING POSITION

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | AU-A-473 330 (UPENIEKS)<br>* page 2, line 1 - page 2, line 8 *<br>* page 4, line 7 - page 5, line 23 *<br>* page 6, line 22 - page 7, line 2 *<br>* page 7, line 22 - page 9, line 24; figures 1,2 * | 1,2,4 | B64C33/02 |
| A | | 3 | |
| A | FR-A-2 458 458 (RADIUS)<br>* page 1, line 10 - page 1, line 18 *<br>* page 1, line 26 - page 1, line 30; figure 1 * | 1,3 | |
| A | FR-A-2 533 881 (RODRIGUEZ)<br>* page 1, line 11 - page 1, line 18 *<br>* page 2, line 9 - page 2, line 19 *<br>* page 7, line 18 - page 7, line 28; figures 1,5,20 * | 1,2 | |

TECHNICAL FIELDS
SEARCHED (Int. Cl.5)

B64C

The present search report has been drawn up for all claims

| Place of search | Date of completion of the search | Examiner |
|---|---|---|
| THE HAGUE | 09 DECEMBER 1991 | ZERI A. |

EPO FORM 1503 03.82 (P0401)